# EUROPEAN PATENT APPLICATION

(11) **EP 4 254 258 A1**
(43) Date of publication of application: **04.10.2023**
(21) Application number: 21897150.5
(22) Date of filing: 26.11.2021
(51) Int. Cl.: G06K 7/10, G06K 7/14

(54) **LIGHT SUPPLEMENT MODULE FOR BAR CODE READING AND BAR CODE READING DEVICE**

(30) Priority: 27.11.2020 CN 202011356108; 27.11.2020 CN 202022794534 U
(71) Applicant: Hangzhou Hikrobot Co., Ltd., Hangzhou, Zhejiang 310051 (CN)
(72) Inventor: YANG, Fan, Hangzhou, Zhejiang 310051 (CN); LIU, Juan, Hangzhou, Zhejiang 310051 (CN)
(74) Representative: Epping - Hermann - Fischer
(86) International application number: PCT/CN2021/133667
(87) International publication number: WO 2022/111650

(57) **Abstract**

The present application provides a light supplementing module for barcode reading and a barcode reading device. Based on the present disclosure, light supplementing spots formed by polarized imaging of the light supplementing source by each of polarizing components in the light supplementing module by means of the polarizing lens converge towards a designated field of view area in a camera field of view of the code reading camera at a target imaging distance, and overlap to form an overlapping spot of which the brightness uniformity is larger than or equal to a preset uniformity threshold, wherein, the designated field of view area of the code reading camera can fall within a spot range of the overlapping spot, and a contour of the overlapping spot can converge towards a boundary of the designated field of view. Thus, beams generated by light supplementing sources can be uniformed based on polarization and convergence of the lens, so that light energy for light supplementing uniformly converges in the designated field of view area. As a result, compared to uniformed based on light diffusion, improvement of utilization rate of the light energy for light supplementing is facilitated.

## Description

The present application claims the priority to a Chinese patent application No. 202011356108.6 filed with the China National Intellectual Property Administration on November 27, 2020 and entitled "Light Supplementing Module for Barcode Reading and Barcode Reading Device" and a Chinese patent application No. 202022794534.X filed with the China National Intellectual Property Administration on November 27, 2020 and entitled "Light Supplementing Module for Barcode Reading and Barcode Reading Device", which is incorporated herein by reference in its entirety.

### Technical Field

The present disclosure relates to logistics automation technology, and in particular to a light supplementing module for barcode reading and a barcode reading device to which the light supplementing module is applied.

### Background

When reading a barcode, if there is insufficient ambient light, the imaging effect and code reading rate will be affected. In a serious situation, it may result in a failure to read a code. Therefore, in a scenario of reading a barcode, it is usually necessary to deploy a light supplementing module.

A traditional light supplementing module generally uses a simple arrangement of combining a plurality of light sources and uses a diffusion plate to diffuse beams generated by the plurality of light sources uniformly.

However, light diffused by the diffusion plate is distributed uniformly at a relatively low energy level within an irradiation range with an area far larger than a field of view of a code reading camera, thus resulting in low utilization rate of light energy for light supplementing.

### Summary

Embodiments of the present disclosure provide a light supplementing module for barcode reading and a barcode reading device to which the light supplementing module is applied, which facilitate improving the utilization rate of light energy for light supplementing.

A light supplementing module for barcode reading provided in an embodiment can include:
at least two polarizing components, each of the polarizing components being eccentrically arranged relative to a camera window, and each of the polarizing components including a light supplementing source and a polarizing lens that performs polarized imaging of the light supplementing source;
when a code reading camera reads and images a barcode by means of the camera window, light supplementing spots formed by polarized imaging of the light supplementing sources by each of the polarizing components by means of the polarizing lenses converge towards a designated field of view area in a camera field of view of the code reading camera at a target imaging distance, and overlap to form an overlapping spot of which an brightness uniformity is larger than or equal to a preset uniformity threshold,
wherein, the designated field of view area falls within a spot range of the overlapping spot, and a contour of the overlapping spot converges towards a boundary of the designated field of view.

Optionally, the camera field of view of the code reading camera at the target imaging distance includes a proximal field of view and a distal field of view, wherein, the proximal field of view is located at a proximal side boundary of a foreground depth of field that extends towards a proximal side based on the target imaging distance, and the distal field of view is located at a distal side boundary of a background depth of field that extends towards a distal side based on the target imaging distance; the overlapping spot covers a depth of field range of field of view from the proximal field of view to the distal field of view.

Optionally, the polarizing lens of each of the polarizing components is configured such that the overlapping spot is rectangular.

Optionally, the designated field of view area is a first field of view area of the code reading camera, and image resolving power of the code reading camera with respect to the first field of view is higher than image resolving power of the code reading camera with respect to a second field of view surrounding the first field of view.

Optionally, the polarizing components include first polarizing components and second polarizing components arranged at an interval in a first direction; the first polarizing components include a first light supplementing source and a first polarizing lens; the second polarizing components include a second light supplementing source and a second polarizing lens; a light supplementing spot formed by polarized imaging of the first light supplementing source by the first polarizing lens at a preset first designated distance and a light supplementing spot formed by polarized imaging of the second light supplementing source by the second polarizing lens at a preset second designated distance converge towards the designated field of view area of the code reading camera, and overlap to form the overlapping spot; wherein, the first designated distance is different from the second designated distance.

Optionally, the first polarizing components are arranged in pairs on two opposite sides of the camera window in a second direction that intersects with the first direction; the second polarizing components are arranged in pairs on two opposite sides of the camera window in the second direction.

Optionally, an interval at which the first polarizing components are arranged in the second direction is different than an interval at which the second polarizing components are arranged in the second direction.

Optionally, the light supplementing module further includes a light supplementing source substrate supporting the light supplementing sources , the light supplementing source substrate is detachably fitted to a lamp holder at which the camera window is located, and the polarizing lenses and the light supplementing sources are aligned and embedded in the lamp holder.

Optionally, the lamp holder has snaps and the light supplementing source substrate has slots, and the light supplementing source substrate is snap-fitted to the lamp holder by means of cooperation between the snaps and the slots.

A barcode reading device provided in another embodiment can include a code reading camera and the light supplementing module as described in the above embodiment.

Based on the above embodiments, light supplementing spots formed by polarized imaging of the light supplementing source by each of the polarizing components by means of the polarizing lens converge towards a designated field of view area in a camera field of view of the code reading camera at a target imaging distance, and overlap to form an overlapping spot of which the brightness uniformity is larger than or equal to a preset uniformity threshold, wherein, the designated field of view area of the code reading camera can fall within a spot range of the overlapping spot, and a contour of the overlapping spot can converge towards a boundary of the designated field of view. Thus, beams generated by light supplementing sources can be uniformed based on polarization and convergence of the lens, so that light energy for light supplementing uniformly converges in the designated field of view area. As a result, compared to uniformed based on light diffusion, improvement of utilization rate of the light energy for light supplementing is facilitated.

### Brief Description of the Drawings

In order to describe the technical solutions of embodiments of the present application and of the related art more clearly, a brief introduction of the drawings required in the embodiments and the related art will be given. Obviously, the drawings described below are just for some embodiments of the present application and other drawings may be obtained by those of ordinary skills in the art based on these drawings without any creative effort.
Fig. 1 is a schematic assembled structure view of a barcode reading device in an embodiment;
Fig. 2 is a schematic exploded structure view of a light supplementing module in the barcode reading device shown in Fig. 1;
Figs. 3a to 3c are schematic assembled structure views of the light supplementing module in the barcode reading device shown in Fig. 1;
Figs. 4a and 4b are renderings of the field of view of the barcode reading device shown in Fig. 1;
Fig. 5 is a schematic view of a deployment example of the barcode reading device shown in Fig. 1;
Figs. 6a to 6f are schematic views of alternative structures of the light supplementing module in the barcode reading device shown in Fig. 1;
Fig. 7 is a schematic assembled structure view of a barcode reading device in another embodiment;
Fig. 8 is a schematic partial exploded structure view of the barcode reading device shown in Fig. 7;
Figs. 9a to 9c are schematic partial structure views of the barcode reading device shown in Fig. 7;
Fig. 10 is a schematic exploded structure view of an aim indicating means in the barcode reading device shown in Fig. 7;
Figs. 11a to 11d are schematic structure views of a light shielding cylinder cover of the aim indicating means shown in Fig. 10;
Figs. 12a to 12c are schematic structure views of a lens cap of the aim indicating means shown in Fig. 10;
Fig. 13 is a schematic partial assembled structure view of the aim indicating means shown in Fig. 10;
Fig. 14 is an section view taken along A-A of the partial assembled structure shown in Fig. 13;
Fig. 15 is a schematic assembled structure view of the aim indicating means shown in Fig. 10;
Fig. 16 is a section view taken along B-B of the assembled structure shown in Fig. 15;
Figs. 17a and 17b are renderings of the field of view of the barcode reading device shown in Fig. 7;
Fig. 18 is a rendering of the field of view of the barcode reading device shown in Fig. 7 based on an improved structure;
Fig. 19 is a rendering of the field of view of the barcode reading device shown in Fig. 7 based on another improved structure.

### Description of reference signs:

10-light supplementing module, 100-overlapping spot;
20-lamp holder;
21-panel, 211-camera window, 212-aim window;
22-periphery, 221-concave notch, 222-protruding rib wall, 223-cambered rib wall;
23-snap;
30-polarizing component, 30a- light supplementing source, 30b-polarizing lens;
31-first polarizing component, 31a-first light supplementing source, 31b-first polarizing lens;
32-second polarizing component, 32a-second light supplementing source, 32b-second polarizing lens;
33- light supplementing source substrate, 331-camera hole slot, 332-aim hole slot, 333-slot;
40-aim indicating means, 400-indicating spot;
50-light shielding cylinder cover, 50a-first opening end, 50b-second opening end;
500-beam shaping chamber, 500a-light source receiving sub-chamber, 500b-beamforming light transmitting sub-chamber;
51-light shielding partition;
52-spot cutting hole, 521-cutting hole section, 522-diffusion hole section;
53-mounting ear, 530-first screw hole;
54-positioning pin, 55-positioning slot; 56-insertion slot; 57-position limiting stepped ring;
60-light emitting module;
61-indicating light source;
62-indicating light source substrate, 620-second screw hole;
63-positioning hole;
64-camera notch;
70-lens cap; 71-lens frame; 72-beamforming lens; 73- clamping arm;
80-code reading camera;
90-barcode reading device, 900-barcode carrier;
91-one-dimensional code, 92-two-dimensional code.

### Detailed Description

In order to make the objects, technical solutions and advantages of the present disclosure more clearly, the present application will be further described in detail below with reference to the appended drawings and embodiments. Apparently, the described embodiments are only some and not all of the embodiments of the present disclosure. Based on the embodiments in the present disclosure, all other embodiments obtained by those of ordinary skill in the art without creative efforts fall within the protection scope of the present disclosure.

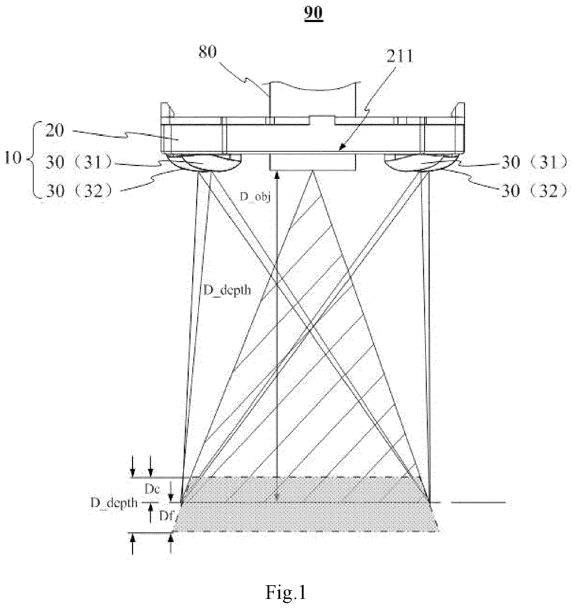

Fig. 1 is a schematic assembled structure view of a barcode reading device in an embodiment. In reference to Fig. 1, in an embodiment, a barcode reading device 90 can include a code reading camera 80 and a light supplementing module 10.

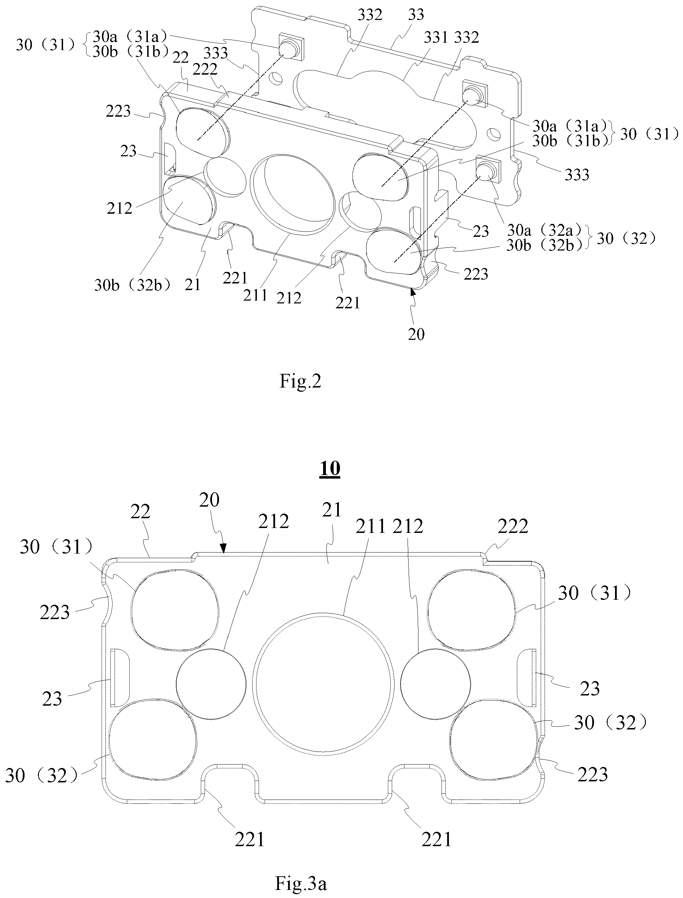

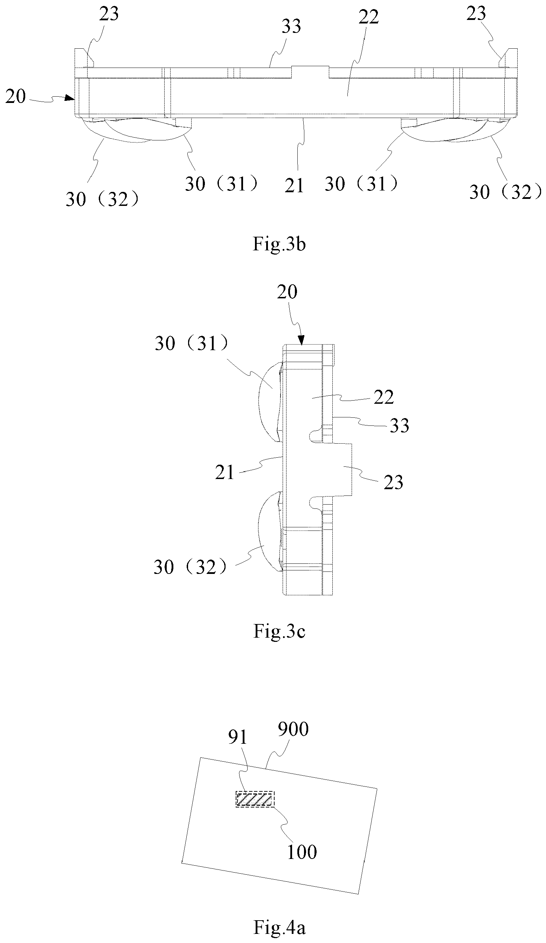

Fig. 2 is a schematic exploded structure view of the light supplementing module in the barcode reading device shown in Fig. 1. Figs. 3a to 3c are schematic assembled structure views of the light supplementing module in the barcode reading device shown in Fig. 1. In reference to Fig. 2 and in combination with Figs. 1 and 3a to 3c, the light supplementing module 10 can include a lamp holder 20 and at least two polarizing components 30.

The lamp holder 20 can have a panel 21, and the panel 21 is provided with a camera window 211. In addition, the lamp holder 20 can also have a periphery 22 enclosed around an edge of the panel 21.

At least two polarizing components 30 can be provided at the lamp holder 20. Each polarizing component 30 is eccentrically arranged relative to the camera window 211. In addition, each polarizing component 30 includes a light supplementing source 30a and a polarizing lens 30b that performs polarized imaging on the light supplementing source 30a. For example, each polarizing component 30 can be considered as a smallest light supplementing unit in the light supplementing module 10. Each polarizing component 30 can include a light supplementing source 30a and a polarizing lens 30b dedicated to polarized imaging of the light supplementing source 30a. The light supplementing source 30a can be a visible light emitting element such as an LED (Light Emitting Diode), and a non-optical surface of the polarizing lens 30b can be frosted.

For example, the light supplementing module 10 can further include a light supplementing source substrate 33 supporting the light supplementing source 30a (the light supplementing sources 30a can be welded to the light supplementing source substrate 33). The light supplementing source substrate 33 is detachably fitted to the lamp holder 20 (the light supplementing source substrate 33 can also have a camera hole slot 331 aligned with the camera window 211). In addition, the polarizing lenses 30b can be aligned with the light supplementing sources 30a and embedded in the lamp holder 20.

It can be seen from Figs. 2 and 3a to 3c that the lamp holder 20 can have snaps 23 and the light supplementing source substrate 33 can have slots 333. The light supplementing source substrate 33 can be attached to the lamp holder 20 in a snap-fit manner by means of cooperation between the snaps 23 and the slots 333. That is, the light supplementing source substrate 33 can be supported by the periphery 22 of the lamp holder 20. The snaps 23 of the lamp holder can be received in the slots 333 of the light supplementing source substrate 33. In addition, the light supplementing source substrate 33 can be held in a snap-fit manner between the snaps 23 and the periphery 22 of the lamp holder 20.

When the code reading camera 80 reads and images a barcode through the camera window 211:
Light supplementing spots formed by polarized imaging of the light supplementing sources 30a by the respective polarizing components 30 by means of the polarizing lenses 30b (spots of imaging of the light supplementing sources 30a by the polarizing lenses 30b) can converge towards a designated field of view area in a camera field of view formed at a preset target imaging distance D_obj by the code reading camera 80 through the camera window 211, and can overlap to form an overlapping spot 100 of which an brightness uniformity is larger than or equal to a preset uniformity threshold, wherein the overlapping spot 100 is used for achieving uniform light supplementing, an objective of which is to allow the code reading camera 80 to obtain an image of good quality that facilitates increasing a success rate of code reading. Therefore, the preset uniformity threshold can be set based on the image resolving power of the code reading camera 80 and a preset expected success rate of code reading.

The designated field of view area in the camera field of view formed at the preset target imaging distance D_obj by the code reading camera 80 through the camera window 211 can fall within a spot range of the overlapping spot 100 formed by the respective polarizing components 30. In addition, the contour of the overlapping spot 100 can converge towards a boundary of the designated field of view area. For example, a shape and size of the overlapping spot 100 can approach a shape and size of the designated field of view area, or a ratio of an area of the designated field of view area to an area of the spot range of the overlapping spot 100 can be larger than a preset threshold (the threshold can be any percentage value that is larger than or equal to 50% and smaller than or equal to 100%, preferably any percentage value that is larger than or equal to 75% and smaller than or equal to 100%, and more preferably any percentage value that is larger than or equal to 85% and smaller than or equal to 100%, i.e., as close to 100% as possible).

It can be seen from Fig. 1 that the code reading camera 80 can have a certain code reading depth of field D_depth, i.e., a foreground depth of field Dc extending towards a proximal side based on the target imaging distance D_obj, and a background depth of field Df extending towards a distal side based on the target imaging distance D_obj. A depth of field can be understood as the tolerance of a shift of the target imaging distance D_obj allowed by the fuzzy recognition capacity of an ISP (Image Signal Processing) algorithm used by the code reading camera 80 to recognize a barcode from an image. Therefore, values of the foreground depth of field Dc and the background depth of field Df may be different depending on the fuzzy recognition capacity of the ISP algorithm.

In a situation where the code reading camera 80 has a depth of field, the camera field of view of the code reading camera 80 at the target imaging distance D_obj can include a proximal field of view and a distal field of view, wherein, the proximal field of view is located at a proximal side boundary of the foreground depth of field Dc extending towards a proximal side based on the target imaging distance D_obj, and the distal field of view is located at a distal side boundary of the background depth of field Df extending towards a distal side based on the target imaging distance D_obj. In addition, the overlapping spot 100 covers a depth of field range of field of view from the proximal field of view to the distal field of view.

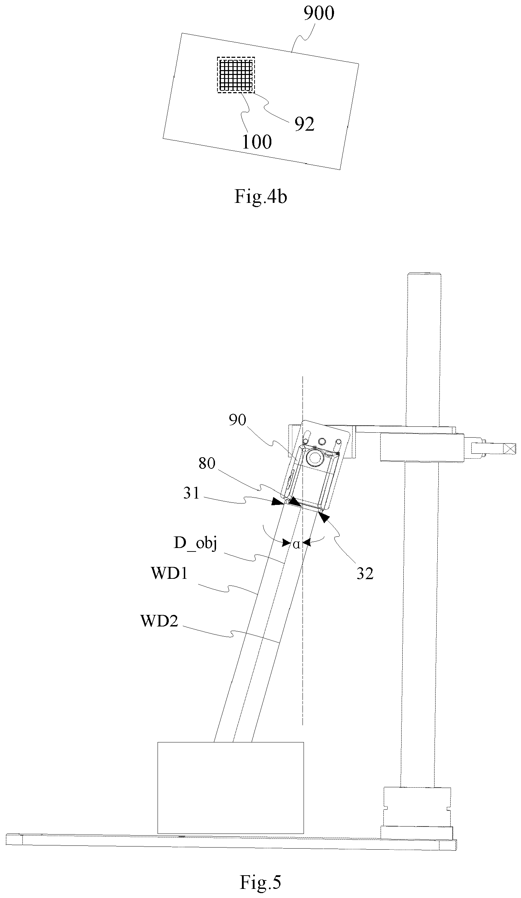

Figs. 4a and 4b are renderings of the field of view of the barcode reading device shown in Fig. 1. In Figs. 4a and 4b, the designated field of view area is a field of view area where the code reading camera 80 has a relatively good imaging effect on barcode, which is generally a first field of view area at the center of the camera field of view of the code reading camera 80. The image resolving power of the code reading camera with respect to the first field of view area is higher than the image resolving power of the code reading camera with respect to a second field of view area surrounding the first field of view area.

Barcodes that the code reading camera 80 is capable of recognizing can be one-dimensional codes 91 or two-dimensional codes 92. One-dimensional codes 91 can be composed of black bars ( "bars" for short) and white bars ( "blanks" for short) that have a sufficient difference in reflectivity. Data formed by those bars and blanks express certain information and are capable of being recognized and read by a specific device and converted into binary and decimal information compatible with a computer. In addition, the one-dimensional codes 91 can further include characters. The two-dimensional codes 92 can be graphic identifiers that have a certain specific geometric graphs distributed based on a certain rule in a plane (in two-dimensional directions), with black alternating with white colors, and recording data symbol information.

In Fig. 4a, an example is used in which the boundary of an overlapping spot 100 formed by the respective polarizing components 30 converges towards the boundary of the designated field of view area where a one-dimensional code 91 attached to a surface of a barcode carrier 900 is located; in Fig. 4b, an example is used in which the boundary of an overlapping spot 100 formed by the respective polarizing components 30 converges towards the boundary of the designated field of view area where a two-dimensional code 92 attached to a surface of a barcode carrier 900 is located.

That is, the location, shape, and size of the designated field of view area can be set based on actual code reading needs. Correspondingly, by replacing polarizing lenses 30b of different optical properties, the location, shape, and size of the overlapping spot 100 can be adjusted without adjusting the arrangement of the light supplementing sources 30a at the light supplementing source substrate 33.

Based on the above-described embodiment, light supplementing spots, which are formed by polarized imaging of the light supplementing sources 30a by the respective polarizing components 30 of the light supplementing module 10 through the polarizing lenses 30b, can converge towards the designated field of view area in the camera field of view of the code reading camera 80 at the target imaging distance D_obj, and can overlap to form the overlapping spot 100 of which the uniformity of brightness is larger than or equal to the preset uniformity threshold; wherein, the designated field of view area in the camera field of view of the code reading camera 80 at the target imaging distance D_obj can fall within the spot range of the overlapping spot 100, and the contour of the overlapping spot 100 can converge towards the boundary of the designated field of view area of the code reading camera 80, so that the designated field of view area is covered by the overlapping spot 100 with as little energy loss as possible.

For example, the shape and size of the overlapping spot 100 can be identical to the shape and size of the designated field of view area, and the designated field of view area can coincide with the spot range of the overlapping spot 100.

Alternatively, the shape and size of the overlapping spot 100 can be slightly larger than the shape and size of the designated field of view area, so that the ratio of the area of the designated field of view area to the area of the spot range of the overlapping spot 100 can be larger than a preset threshold, and thus the overlapping spot 100 forms redundant coverage for the designated field of view area with a redundancy not exceed a preset threshold.

Thus, beams produced by the light supplementing sources 30a can be uniformed based on polarizing and convergence of the polarizing lenses 30b, so that light energy for light supplementing uniformly converges in the designated field of view area, thereby helping to increase utilization rate of light energy for light supplementing compared to uniformed based on light diffusion.

In some embodiments, the polarizing lenses 30b of the respective polarizing components 30 can be configured such that the overlapping spot 100 is rectangular, so that the light supplementing range follows more closely the rectangular shape of a barcode, so as to further increase utilization rate of energy for light supplementing.

Fig. 5 is a schematic view of a deployment example of the barcode reading device shown in Fig. 1. In reference to Fig. 5, in certain code reading scenarios, the barcode reading device 90 can be mounted in a tilted way, for example, tilting by 10° to 20° (preferably 15°) relative to the vertical direction, so as to achieve tilted capturing of a barcode. This is for avoiding light pollution to the camera field of view of the code reading camera 80, caused by mirror reflection created by the surface of the barcode. At this moment, the polarized imaging properties of the respective polarizing components 30 can be not exactly the same, so as to adapt to a tilting difference of an imaging plane in which the designated field of view area of the code reading camera 80 is present relative to light emitting planes in which the respective polarizing components 30 are present.

For example, the polarizing components 30 can include first polarizing components 31 and second polarizing components 32 arranged at an interval in a first direction (for example, a longitudinal direction), wherein,
the first polarizing components 31 can be arranged in pairs in a second direction (for example, a transversal direction) that intersects with (for example, is perpendicular to) the first direction, and each first polarizing component 31 can include a first light supplementing source 31a and a first polarizing lens 31b;
the second polarizing component 32 can be arranged in pairs in the second direction (for example, the transversal direction), and each second polarizing component 32 can include a second light supplementing source 32a and a second polarizing lens 32b;
light supplementing spots formed by polarized imaging of the first light supplementing sources 31a by the first polarizing lenses 31b arranged in pairs at a preset first designated distance WD1, and light supplementing spots formed by polarized imaging of the second light supplementing sources 32a by the second polarizing lenses 32b arranged in pairs at a preset second designated distance WD2, overlap to form an overlapping spot 100 that covers the designated field of view area in the camera field of view of the code reading camera 80 at a target imaging distance D_obj.

The first designated distance WD1 can be different from the second designated distance WD2 (for example, the first designated distance WD1 can be larger than the second designated distance WD2).

In this embodiment, the first polarizing components 31 can be arranged symmetrically on two opposite sides of the camera window 211 in the second direction (transversal direction), and the second polarizing components 32 can be arranged symmetrically at two opposite sides of the camera window 211 in the second direction (transversal direction), so as to form a four-point polarizing arrangement with the camera window 211 being the center.

In addition, the interval at which the first polarizing components 31 are arranged symmetrically in the second direction (transversal direction) can be different from the interval at which the second polarizing components are arranged symmetrically 32 in the second direction (transversal direction). For example, a concave notch 221 can be formed at the periphery 22 at the side where the second polarizing components 32 are located, so that the second polarizing components 32 are distant from each other in the second direction (transversal direction) in order to avoid the concave notch 221. The concave notch 221, on one hand, has a function of identifying the side where the second polarizing components 32 are located, and on the other hand, has a function of a reinforcing rib that increases a strength of the lamp holder 20.

In addition to the concave notch 221, which can perform the role of a reinforcing rib, a protruding rib wall 222, that performs a similar role to that of the concave notch 221, can also be formed at the periphery 22 at the side where the first polarizing components 31 are located. In addition, cambered rib walls 223 in a discrete distribution can also be arranged.

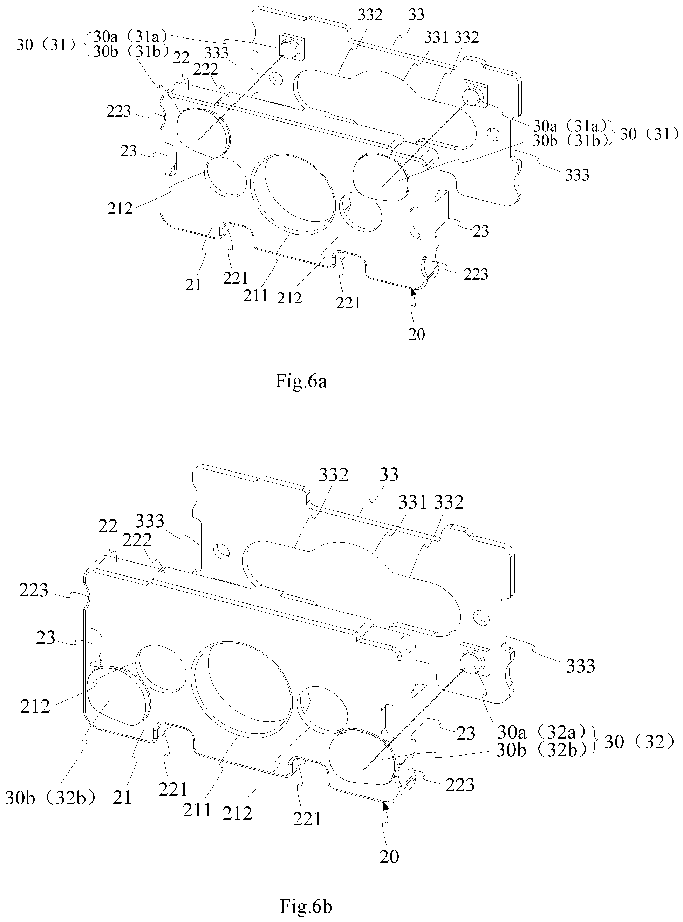

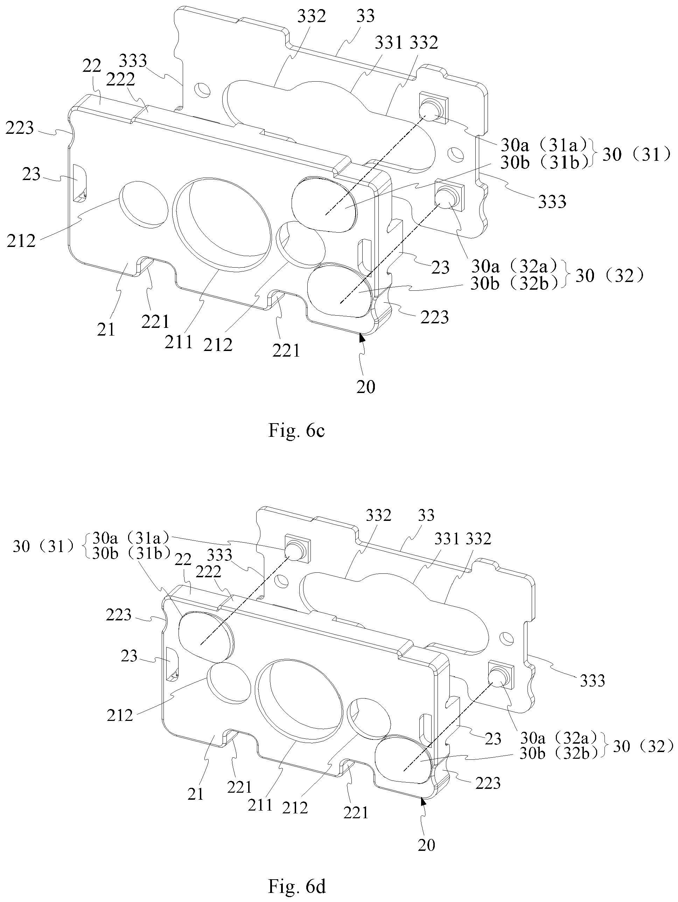

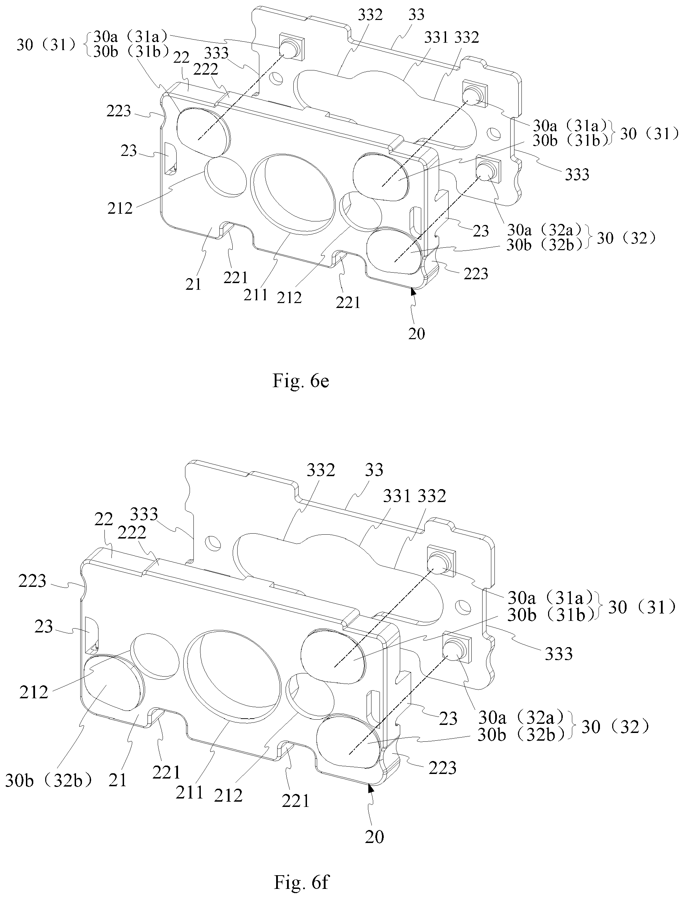

Figs. 6a to 6f are schematic views of alternative structures of the light supplementing module of the barcode reading device shown in Fig. 1. In the above-described embodiments, an example is used in which at least two polarizing components 30 include a pair of first polarizing components 31 and a pair of second polarizing components 32, i.e., four polarizing components in total. It can be understood that actual design is not limited to this. For example:
in reference to Fig. 6a, the at least two polarizing components 30 at least can include a pair of first polarizing components 31, i.e., two polarizing components in total, or,
in reference to Fig. 6b, the at least two polarizing components 30 at least can include a pair of second polarizing components 32, i.e., two polarizing components in total, or,
in reference to Figs. 6c or 6d, the at least two polarizing components 30 at least can include only one first polarizing component 31 and one second polarizing component 32 at the same side or opposite sides in the second direction, i.e., two polarizing components in total, or,
in reference to Fig. 6e, the at least two polarizing components 30 can include a pair of first polarizing components 31 and one second polarizing component 32, i.e., three polarizing components in total,
similarly, in reference to Fig. 6f, the at least two polarizing components 30 can include one first polarizing component 31 and a pair of second polarizing components 32.

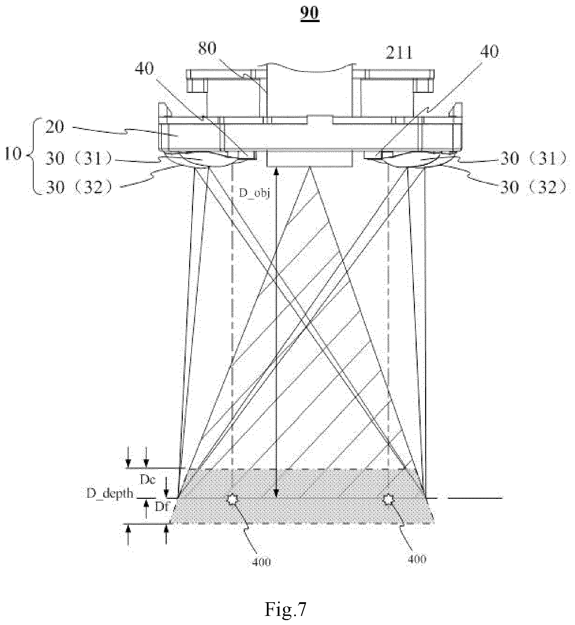

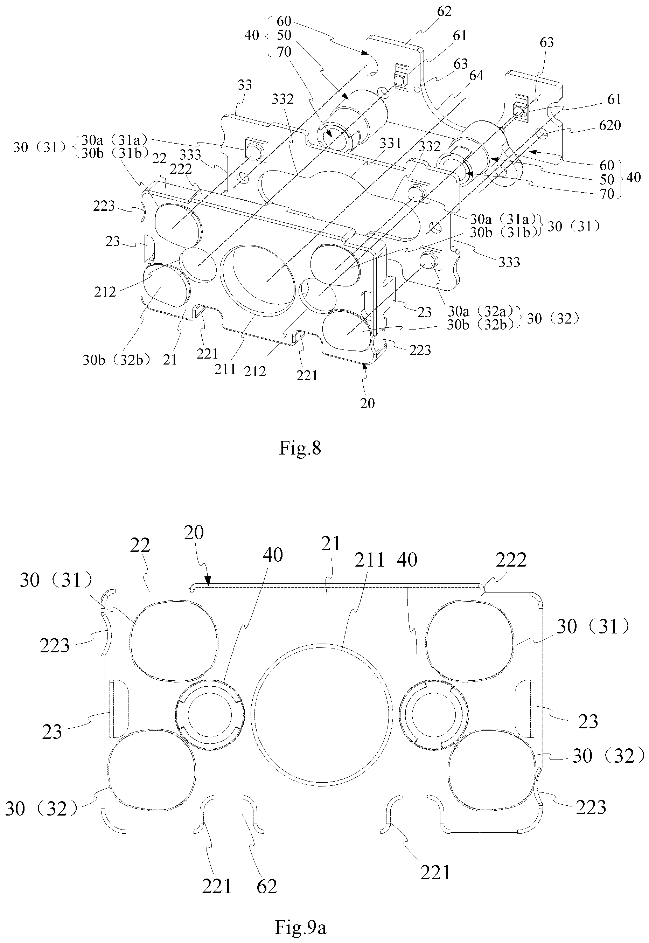

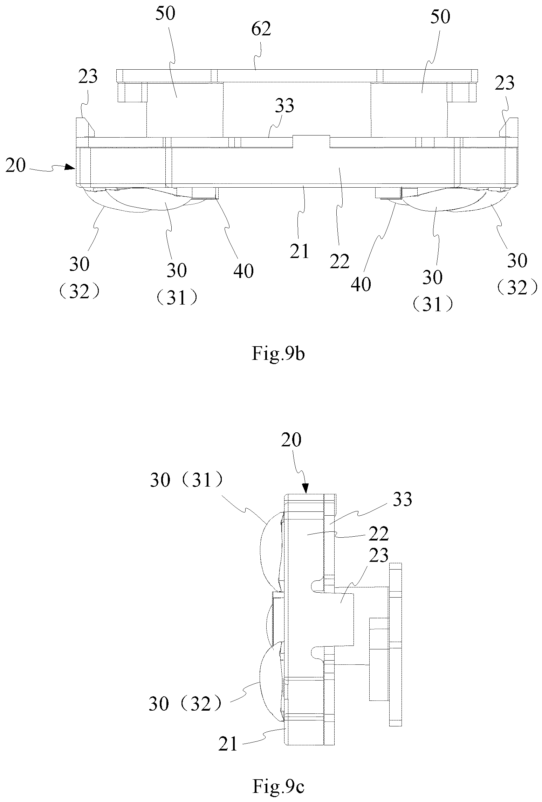

Fig. 7 is a schematic assembled structure view of a barcode reading device in another embodiment. Fig. 8 is a schematic partial exploded structure view of the barcode reading device shown in Fig. 7. Figs. 9a to 9c are schematic partial structure views of the barcode reading device shown in Fig. 7.

In reference to Fig. 7 and in combination with Figs. 8 and 9a to 9c, in order to be able to indicate clearly the overlapping spot 100 and the designated field of view area of the code reading camera 80 falling within the spot range of the overlapping spot 100, in another embodiment, the barcode reading device 90 can further include an aim indicating means 40. For example, the aim indicating means 40 can be arranged in pairs at two opposite sides of the camera slot 64.

The aim indicating means 40 can form an indicating spot 400 with a brightness higher than that of the overlapping spot 100 at the edge of the designated field of view area (the first field of view area). For example, the indicating spot 400 of the aim indicating means 40 can be located at the edge of the designated field of view area (the first field of view area) of the code reading camera 80.

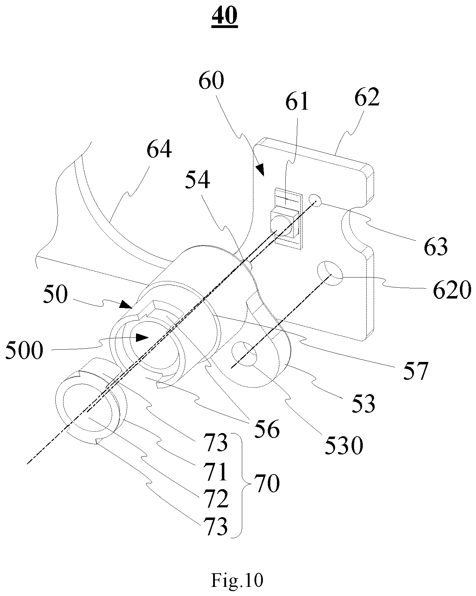

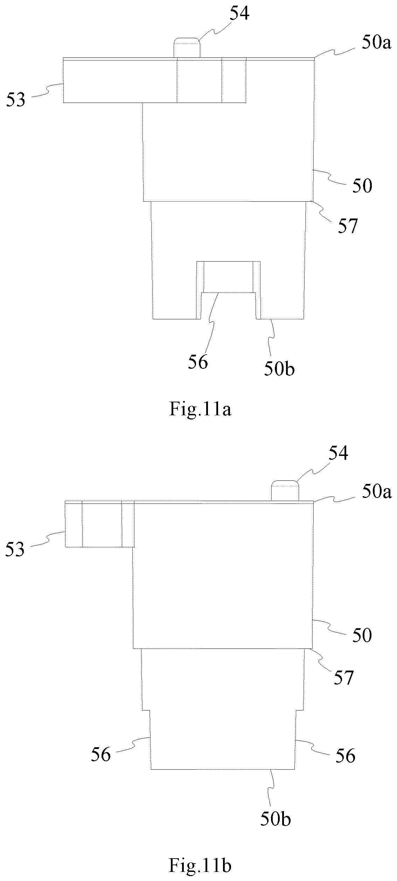

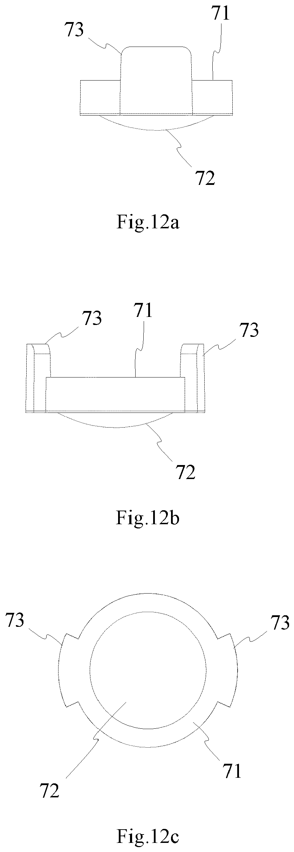

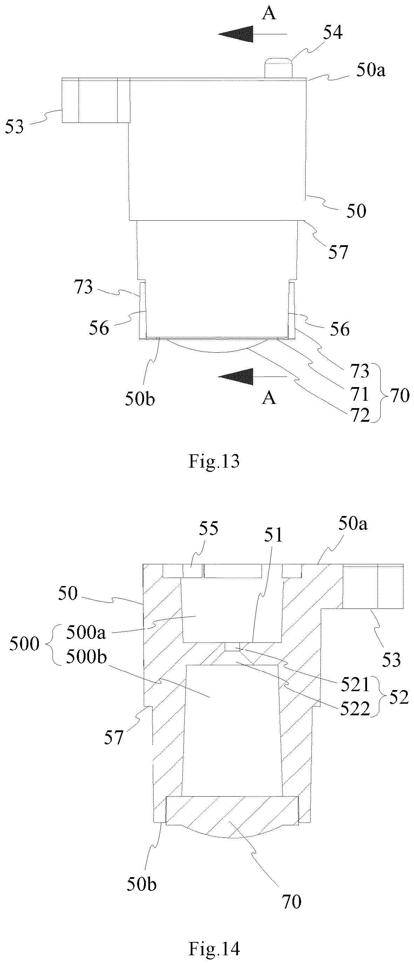

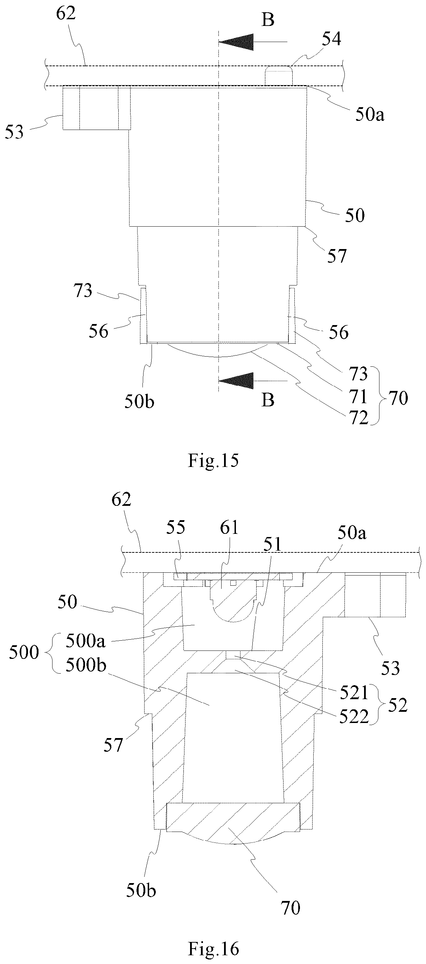

Fig. 10 is a schematic exploded structure view of the aim indicating means in the barcode reading device shown in Fig. 7. Figs. 11a to 11d are schematic structure views of a light shielding cylinder cover of the aim indicating means shown in Fig. 10. Figs. 12a to 12c are schematic structure views of a lens cap of the aim indicating means shown in Fig. 10. Fig. 13 is a schematic partial assembled structure view of the aim indicating means shown in Fig. 10. Fig. 14 is an section view taken along A-A of the partial assembled structure shown in Fig. 13. Figs. 15 is a schematic assembled structure view of the aim indicating means shown in Fig. 10. Fig. 16 is a section view taken along B-B of the assembled structure shown in Fig. 15.

In this embodiment, the aim indicating means 40 for barcode reading can include a light shielding cylinder cover 50, a light emitting module 60 and a lens cap 70.

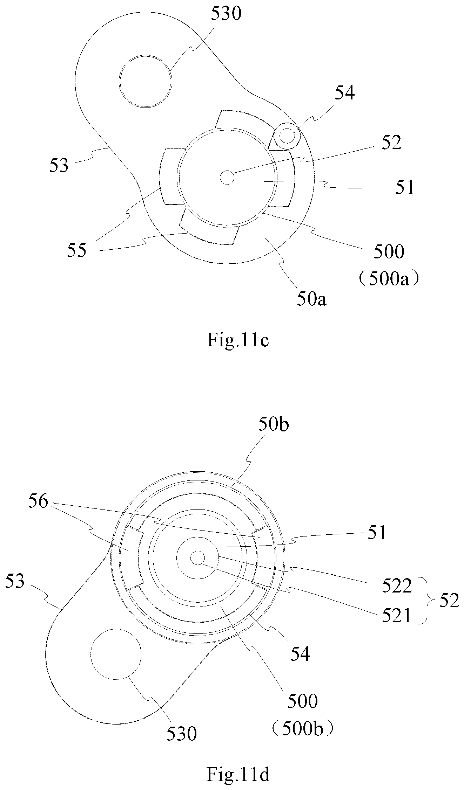

In reference to Fig. 10 and in combination with Figs. 11a to 11d and 13 to 16, the light shielding cylinder cover 50 can have a first opening end 50a (Fig. 11c is an end projection view of the first opening end 50a), a second opening end 50b (Fig. 11d is an end projection view of the second opening end 50b), and a beam shaping chamber 500 that passes through between the first opening end 50a and the second opening end 50b.

In addition, other than the camera window 211 sleeved to the camera lens of the code reading camera 80, the lamp holder 20 can further have an aim window 212 adjacent to the camera window 211. The aim indicating means 40 is fitted to the lamp holder 20 through the snap-fit of light shielding cylinder cover 50 and aim window 212. Correspondingly, the light supplementing source substrate 33 can also have an aim hole slot 332 aligned with the aim window 212. The outer peripheral surface of the light shielding cylinder cover 50 can be in the shape of a conical surface, so as to facilitate s the aim indicating means 40 to pass through the aim window 212. In addition, the outer peripheral surface of the light shielding cylinder cover 50 can also have a position limiting stepped ring 57 so as to achieve position limiting when passing through the aim window 212.

In reference to Fig. 10 and in combination with Figs. 15 and 16, the light emitting module 60 is fitted (for example, detachably fitted) to the first opening end of the light shielding cylinder cover 50.

For example, the light emitting module 60 can include an indicating light source 61, and an indicating light source substrate 62 that carries the indicating light source 61 (the indicating light source 61 can be carried by being welded to the indicating light source substrate 62), wherein, the indicating light source 61 can be a visible light emitting element such as LED (Light Emitting Diode), the indicating light source 61 can be received in the beam shaping chamber 500, and the indicating light source substrate 62 can be stack and press-fitted at the first opening end 50a of the light shielding cylinder cover 50. Considering that green light is most visible to the human eye (i.e., at the same light power, among different wave lengths, a green light source is perceived as brighter by the human eye), an LED producing green visible light can be used as the indicating light source 61.

It can be seen from Figs. 11a and 11b and 15, the light shielding cylinder cover 50 can further have a mounting ear 53 extending in a radial direction, wherein, the mounting ear 53 can have a first screw hole 530, the indicating light source substrate 62 can have a second screw hole 620, and the indicating light source substrate 62 can be stacked and press-fitted at the first opening end 50a of the light shielding cylinder cover 50 by a screw that passes through the first screw hole 530 and the second screw hole 620.

In reference to Fig. 10 and in combination with Figs. 13 and 14, the lens cap 70 is fitted (for example, detachably fitted) at the second opening end 50b of the light shielding cylinder cover 50.

For example, the lens cap 70 can be snap-fitted at the second opening end 50b of the light shielding cylinder cover 50. It can be seen from Figs. 11a and 11b, Figs. 12a to 12c, and 13, the peripheral wall of the light shielding cylinder cover 50 at the second opening end 50b can have a insertion slot 56, and the lens cap 70 can have a lens frame 71, a beamforming lens 72 embedded in the lens frame 71, and a clamping arm 73 protruding from the lens frame 71, wherein, the insertion slot 56 can be arranged in pairs in a radial direction of the light shielding cylinder cover 50, the clamping arm 73 can be arranged in pairs in a radial direction of the lens frame 71, and the clamping arms 73 arranged in pairs are aligned with and inserted into the insertion slots 56 arranged in pairs, so as to achieve radial clamping of the light shielding cylinder cover 50.

In the above-described structure, the beam shaping chamber 500 of the light shielding cylinder cover 50 can be configured to form aperture transmitting light for beams produced by the light emitting module 60 (the indicating light source 61) when powered, the lens cap 70 (the beamforming lens 72) can be configured to image the aperture transmitting light, and the imaging of the aperture transmitting light by the lens cap 70 (the beamforming lens 72) can form, with a diffusion angle smaller than or equal to a preset angle threshold, an indicating spot 400 that has a specified size and of which the uniformity of brightness is larger than or equal to a preset uniformity threshold.

That is, with the above-described structure, when the light emitting module 60 is powered, beams produced by the light emitting module 60 (the indicating light source 61) can form, with the diffusion angle smaller than or equal to the preset angle threshold, an indicating spot 400 that has a specified size and of which the uniformity of brightness is larger than or equal to a preset uniformity threshold, by means of subjecting to imaging of the aperture transmitting light through the beam shaping chamber 500 and the lens cap 70.

Thus, the aim indicating means 40 in this embodiment is capable of producing an indicating spot 400 with a controllable area and uniformity of brightness, thereby helping to accurately indicate a proper code reading location of a barcode and reduce light pollution caused to a field of view of lens, and further helping to improve code reading effects of the barcode reading device 90.

The aperture transmitting light by the beam shaping chamber 500 can be considered as a first beamforming adjustment of beams produced by the light emitting module 60 (the indicating light source 61) when powered, and spot cutting can be used for the aperture transmitting light. Specifically, in reference to Figs. 14 and 16:
there can be a light shielding partition 51 in the beam shaping chamber 500 of the light shielding cylinder cover 50, and the beam shaping chamber 500 can be separated by the light shielding partition 51 into a light source receiving sub-chamber 500a at a side close to the first opening end 50a and a beamforming light transmitting sub-chamber 500b at a side close to the second opening end 50b;
the indicating light source 61 can be received in the light source receiving sub-chamber 500a, that is, the indicating light source 61 can be located at a side of the light shielding partition 51 away from the second opening end 50b; and
the light shield partition 51 is provided with a spot cutting hole 52.

Based on the above-described structure, among beams produced by the light emitting module 60 (the indicating light source 61) when powered, only some of the beams within a specified diffusion angle range (central beams with relatively high brightness) can pass through the spot cutting hole 52 to reach the beamforming light transmitting sub-chamber 500b, while other beams outside a preset diffusion angle range (peripheral beams with relatively low brightness) are shielded and cut by the light shielding partition 51.

Thus, beams that pass through the spot cutting hole 52 and reach the beamforming light transmitting sub-chamber 500b not only have a relatively small diffusion angle, but also have a brightness distribution that concentrates in a relatively small range with high brightness. Therefore, the brightness distribution of those beams is more uniform than the brightness distribution of the beams before cutting, which contain peripheral beams with relatively low brightness.

It can be seen from Figs. 14 and 16 that the spot cutting hole 52 can have a columnar cutting hole section 521 at the side close to the first opening end 50a (facing the light emitting module 60), and can have a pyramidal diffusion hole section 522 at the side close to the second opening end 50b (facing the second opening end 50b), so that beams produced by the light emitting module 60 (the indicating light source 61) when powered can be cut by the cutting hole section 521 and then be released by the diffusion hole section 522 to emit with an angle sufficient to transmit within the entire range of the lens cap 70 (the beamforming lens 72), thus achieving aperture transmitting light for beams produced by the light emitting module 60 (the indicating light source 61) when powered.

It can be understood that the shape of the spot cutting hole 52 used for forming a first beamforming adjustment can be adjusted correspondingly as cutting needs of aperture transmitting light and relative distances between the spot cutting hole 52 and the light emitting module 60 (the indicating light source 61) and the lens cap 70 (the beamforming lens 72) vary. That is, the spot cutting hole 52 can have any shape that satisfies an effect of aperture transmitting light and is sufficient to form an optical path alignment with the lens cap 70 (the beamforming lens 72).

In this embodiment, in order to ensure that an optical axis of the light emitting module 60 (the indicating light source 61) and the spot cutting hole 52 maintain sufficient coaxiality, the light shielding cylinder cover 50 can have a positioning pin 54 arranged at the first opening end 50a, and the light emitting module 60 can have a positioning hole 63 arranged at the indicating light source substrate 62, wherein, the positioning pin 54 and the positioning hole 63 are in positioning fit (insertion fit). Based on this positioning fit as well as cooperative positioning by the screw that passes through the first screw hole 530 and the second screw hole 620, the error of coaxiality between the optical axis of the light emitting module 60 (the indicating light source 61) and an axis of the spot cutting hole 52 can be restricted to be smaller than a preset coaxiality error threshold.

Correspondingly, the indicating light source 61 can be clearance fitted to the beam shaping chamber 500 (the light source receiving sub-chamber 500a), so as to reserve a margin for implementing the above-described positioning and adjustment.

Following the first beamforming adjustment by the beam shaping chamber 500 through spot cutting, imaging of aperture transmitting light by the beam shaping chamber 500 and the lens cap 70 (the beamforming lens 72) can be considered as a second beamforming adjustment for beams produced by the light emitting module 60 (the indicating light source 61) when powered. However, unlike the spot cutting mode in the first beamforming adjustment, the second beamforming adjustment is adjustment based on principles of optical imaging. That is, by imaging of the aperture transmitting light obtained by cutting through the spot cutting hole 52, an indicating spot 400, that has a specified size and of which the uniformity of brightness is larger than or equal to a preset uniformity threshold, is formed by imaging with a diffusion angle smaller than or equal to a preset angle threshold.

In addition, in order to reduce diffuse reflection of beams inside the beam shaping chamber 500 so as to improve the effects of spot cutting and imaging of aperture transmitting light, both the beam shaping chamber 500 and the light shielding partition 51 can have a matte surface.

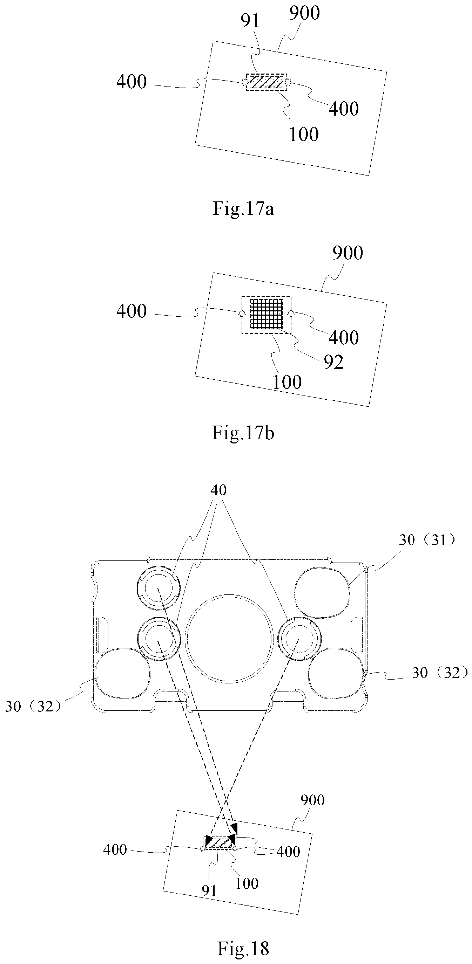

Figs. 17a and 17b are renderings of the field of view of the barcode reading device shown in Fig. 7. In Fig. 17a, an example is used in which the contour of the overlapping spot 100 formed by the respective polarizing components 30 converges towards the boundary of the designated field of view area where a one-dimensional code 91 attached to the surface of a barcode carrier 900 is located, and in this case, indicating spots 400 produced by a pair of aim indicating means 40 are located respectively at edges on two opposite sides of the designated field of view area (the overlapping spot 100). In Fig. 17b, an example is used in which the contour of the overlapping spot 100 formed by the respective polarizing components 30 converges towards the boundary of the designated field of view area where a two-dimensional code 92 attached to the surface of a barcode carrier 900 is located, and in this case, indicating spots 400 produced by a pair of aim indicating means 40 are located respectively at edges on two opposite sides of the designated field of view area (the overlapping spot 100).

From this, it can be seen that the indicating spots 400 can clearly indicate the overlapping spot 100 and the designated field of view area of the code reading camera 80 that falls within the spot range of the overlapping spot 100.

Fig. 18 is a rendering of the field of view of the barcode reading device shown in Fig. 7 based on an improved structure. In reference to Fig. 18, when at least two polarizing components 30 can include only three polarizing components 30, for example, one first polarizing component 31 and a pair of second polarizing components 32, extra space can be obtained for fitting one additional aim indicating means 40, i.e., the barcode reading device 90 can have three aim indicating means 40, so as to form a three-point distribution of indicating spots 400 that can identify a two-dimensional size.

Further, if the at least two polarizing components 30 include only two polarizing components, i.e., extra space saved by omitting a polarizing component 30 can be used for fitting two additional aim indicating means 40, i.e., the barcode reading device 90 can have four aim indicating means 40, so as to form a four-point distribution of indicating spots 400 that can identify a two-dimensional size.

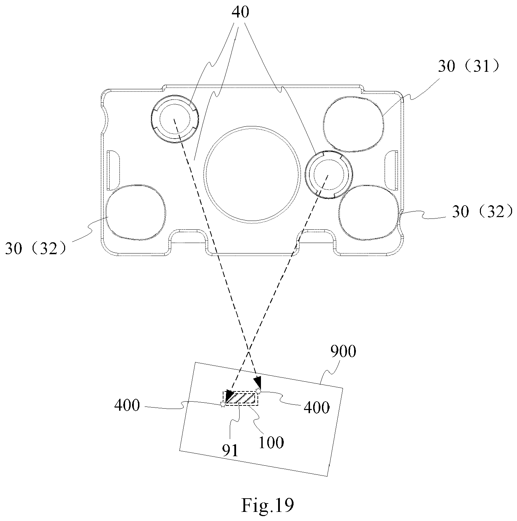

Fig. 19 is a rendering of the field of view of the barcode reading device shown in Fig. 7 based on another improved structure. In reference to Fig. 19, when at least two polarizing components 30 can include only three polarizing components 30, for example, one first polarizing component 31 and a pair of second polarizing components 32, extra space saved can be used for providing a space margin for changing the position of an aim indicating means 40, i.e., the barcode reading device 90 can have two aim indicating means 40 arranged diagonally from each other, so as to form a two-point diagonal distribution of indicating spots 400 that can identify a two-dimensional size.

The above descriptions are only preferred embodiments of the present disclosure, and are not intended to limit the present disclosure. Any modifications, equivalent replacements, improvements made within the spirit and principles of the present disclosure shall be included in the protection scope of the present disclosure.

## Claims

1. A light supplementing module for barcode reading, comprising:
at least two polarizing components (30), each of the polarizing components (30) being eccentrically arranged relative to a camera window (211), and each of the polarizing components (30) comprising a light supplementing source (30a) and a polarizing lens (30b) that performs polarized imaging of the light supplementing source (30a);
when a code reading camera (80) reads and images a barcode by means of the camera window (211), light supplementing spots formed by polarized imaging of the light supplementing sources (30a) by each of the polarizing components (30) by means of the polarizing lenses (30b) converge towards a designated field of view area in a camera field of view of the code reading camera (80) at a target imaging distance, and overlap to form an overlapping spot of which an brightness uniformity is larger than or equal to a preset uniformity threshold,
wherein, the designated field of view area falls within a spot range of the overlapping spot, and a contour of the overlapping spot converges towards a boundary of the designated field of view.

2. The light supplementing module according to claim 1, wherein, the camera field of view of the code reading camera (80) at the target imaging distance comprises a proximal field of view and a distal field of view, wherein, the proximal field of view is located at a proximal side boundary of a foreground depth of field that extends towards a proximal side based on the target imaging distance, and the distal field of view is located at a distal side boundary of a background depth of field that extends towards a distal side based on the target imaging distance;
the overlapping spot covers a depth of field range of field of view from the proximal field of view to the distal field of view.

3. The light supplementing module according to claim 1, wherein, the polarizing lens (30b) of each of the polarizing components (30) is configured such that the overlapping spot is rectangular.

4. The light supplementing module according to claim 1, wherein, the designated field of view area is a first field of view area of the code reading camera (80), and image resolving power of the code reading camera (80) with respect to the first field of view is higher than image resolving power of the code reading camera (80) with respect to a second field of view surrounding the first field of view.

5. The light supplementing module according to claim 3, wherein, the polarizing components (30) comprise first polarizing components (31) and second polarizing components (32) arranged at an interval in a first direction;
the first polarizing components (31) comprise a first light supplementing source (31a) and a first polarizing lens (31b);
the second polarizing components (32) comprise a second light supplementing source (32a) and a second polarizing lens (32b);
a light supplementing spot formed by polarized imaging of the first light supplementing source (31a) by the first polarizing lens (31b) at a preset first designated distance and a light supplementing spot formed by polarized imaging of the second light supplementing source (32a) by the second polarizing lens (32b) at a preset second designated distance converge towards the designated field of view area of the code reading camera (80), and overlap to form the overlapping spot;
wherein, the first designated distance is different from the second designated distance.

6. The light supplementing module according to claim 5, wherein, the first polarizing components (31) are arranged in pairs on two opposite sides of the camera window (211) in a second direction that intersects with the first direction;
the second polarizing components (32) are arranged in pairs on two opposite sides of the camera window (211) in the second direction.

7. The light supplementing module according to claim 6, wherein, an interval at which the first polarizing components (31) are arranged in the second direction is different than an interval at which the second polarizing components (32) are arranged in the second direction.

8. The light supplementing module according to claim 1, wherein, the light supplementing module further comprises a light supplementing source substrate (33) supporting the light supplementing sources (30a), the light supplementing source substrate (33) is detachably fitted to a lamp holder (20) at which the camera window (211) is located, and the polarizing lenses (30b) and the light supplementing sources (30a) are aligned and embedded in the lamp holder (20).

9. The light supplementing module according to claim 8, wherein, the lamp holder (20) has snaps (23) and the light supplementing source substrate (33) has slots (333), and the light supplementing source substrate (33) is snap-fitted to the lamp holder (20) by means of cooperation between the snaps (23) and the slots (333).

10. A barcode reading device, comprising a code reading camera (80) and the light supplementing module (10) according to any one of the claims 1-9.
